# EUROPEAN PATENT APPLICATION

(11) **EP 3 460 733 A1**
(43) Date of publication of application: **27.03.2019**
(21) Application number: 18747829.2
(22) Date of filing: 30.01.2018
(51) Int. Cl.: G06Q 10/06, G06F 17/50, G06Q 50/08

(54) **DESIGN PROCESS SUPPORT SYSTEM, CONTROL METHOD, AND PROGRAM**

(30) Priority: 31.01.2017 JP 2017015649
(71) Applicant: Mitsubishi Heavy Industries, Ltd., Tokyo 108-8215 (JP)
(72) Inventor: MASHIO Kenji, Tokyo 108-8215 (JP); HANADA Satoshi, Tokyo 108-8215 (JP); FUKUI Toshiki, Tokyo 108-8215 (JP)
(74) Representative: Cabinet Beau de Loménie
(86) International application number: PCT/JP2018/002893
(87) International publication number: WO 2018/143170

(57) **Abstract**

A design process support system includes a concept database that stores concepts for different design conditions, wherein the concepts include specification items and information indicating an improvement or deterioration of the specification items so as to be associated with each other, and an improvement support unit that determines the specification item desired to be improved by a user and informs of a concept of a design condition under which the determined specification item is improved.

## Description

### Technical Field

The present invention relates to a design process support system, a control method, and a program.

Priority is claimed on Japanese Patent Application No. 2017-015649, filed on January 31, 2017, the content of which is incorporated herein by reference.

### Background Art

There is a design process taking ergonomics into consideration (for example, see NPL 1).

### Citation List

### Non-Patent Literature

[NPL1] Mashio et al., "Bulletin and ergonomic expert certification organization", bulletin and ergonomic expert certification organization editorial committee, May 1, 2016, Vol. 47, pp 1-5

### Summary of Invention

### Technical Problem

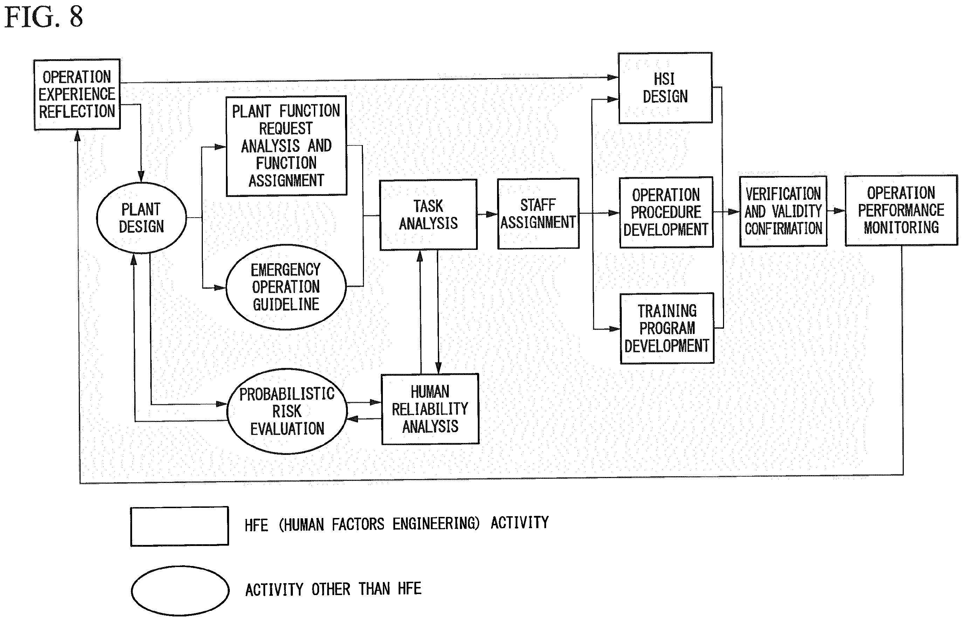

Incidentally, there is a design process as illustrated in FIG. 8 as a design process of a general plant such as a power plant. Since the design process illustrated in FIG. 8 has no connection between respective processes and is designed on the basis of a plant design request considered by a designer of the plant, rework occurs at the end of the design process and causes considerable modification.

In this case, a design time and a design cost increase.

Therefore, a technology that supports improvement of a design process and does not cause rework at an end of a design process is desired.

An object of the present invention is to provide a design process support system, a control method, and a program capable of solving the above problems.

### Solution to Problem

According to a first aspect of the present invention, a design process support system includes: a concept database that stores concepts for different design conditions, wherein the concepts include specification items and information indicating an improvement or deterioration of the specification items so as to be associated with each other; and an improvement support unit that is configured to inform of a concept of a design condition having a great influence on the specification item that a user desires to improve.

According to a second aspect of the present invention, in the design process support system according to the first aspect, the improvement support unit may be configured to inform of improvement or deterioration of another specification item other than the specification item that the user desires to improve when the improvement support unit informs of the concept of the design condition.

According to a third aspect of the present invention, a control method includes: storing concepts for different design conditions, wherein the concepts include specification items and information indicating an improvement or deterioration of the specification items so as to be associated with each other; and informing of a concept of a design condition having a great influence on the specification item that a user desires to improve.

According to a fourth aspect of the present invention, a program causes a computer to execute: storing concepts for different design conditions, wherein the concepts include specification items and information indicating an improvement or deterioration of the specification items so as to be associated with each other; and informing of a concept of a design condition having a great influence on the specification item that a user desires to improve.

According to a fifth aspect of the present invention, a design process support system includes: a concept database that stores concepts for different design conditions, wherein the concepts include specification items and information indicating an improvement or deterioration of the specification items so as to be associated with each other; and an improvement determination unit that is configured to determine whether the specification item to be improved by a user is a specification item to be improved, which is internally derived from the user or a specification item to be improved, which is common to a plurality of users.

### Advantageous Effects of Invention

According to the design process support system according to the embodiment of the present invention, it is possible to support improvement of the design process and to eliminate rework at the end of the design process.

### Brief Description of Drawings

FIG. 1 is a diagram illustrating a configuration of a design process support system according to a first embodiment of the present invention.
FIG. 2 is a diagram illustrating a configuration of an HFE processing device according to the first embodiment of the present invention.
FIG. 3 is a diagram illustrating a configuration of a condition setting processing device according to the first embodiment of the present invention.
FIG. 4 is a diagram illustrating a configuration of a user feedback processing device according to the first embodiment of the present invention.
FIG. 5 is a diagram illustrating a configuration of a verification processing device according to the first embodiment of the present invention.
FIG. 6 is a diagram illustrating an image of a process of the design process support system according to the first embodiment of the present invention.
FIG. 7 is a diagram illustrating a configuration of an HFE processing device according to a second embodiment of the present invention.
FIG. 8 is a diagram illustrating the related art.
FIG. 9 is a schematic block diagram illustrating a configuration of a computer according to at least one of the embodiments of the present invention.

### Description of Embodiments

### <First Embodiment

Hereinafter, a configuration of a design process support system 1 according to a first embodiment of the present invention will be described.

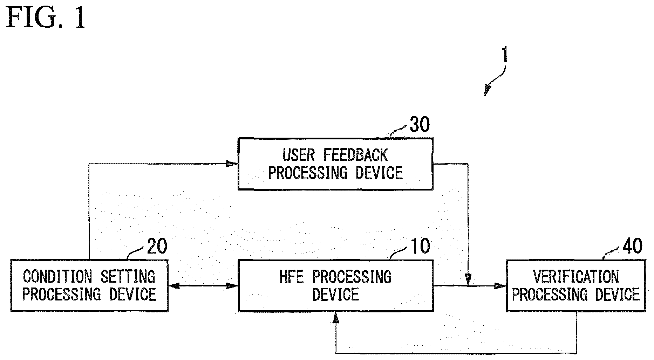

The design process support system 1 according to the first embodiment of the present invention includes a human factors engineering (HFE) processing device 10, a condition setting processing device 20, a user feedback processing device 30, and a verification processing device 40, as illustrated in FIG. 1.

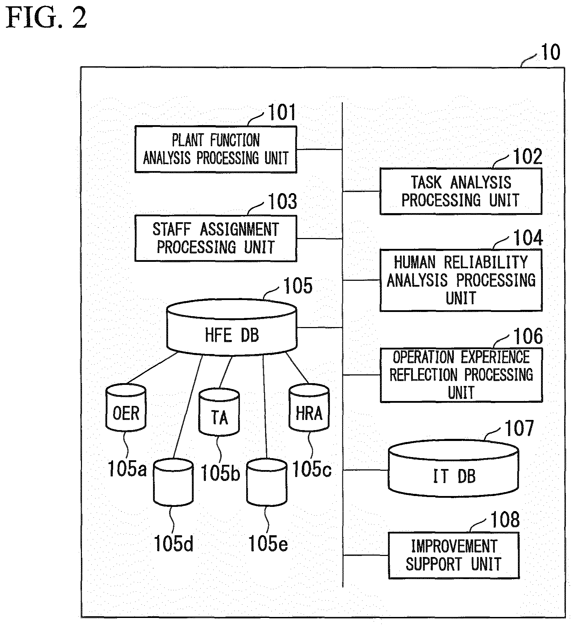

The HFE processing device 10 is a device that specifies a task request. As illustrated in FIG. 2, the HFE processing device 10 includes a plant function analysis processing unit 101, a task analysis processing unit 102, a staff assignment processing unit 103, a human reliability analysis processing unit 104, an operation experience reflection processing unit 106, an HFE database 105, an issue tracking (IT) database 107, and an improvement support unit 108.

A process in each processing unit may be a process using a program or a process that is executed by a designer.

The plant function analysis processing unit 101 sets a target. For example, when the design process support system 1 is a design process of a power plant, the plant function analysis processing unit 101 sets achievement of an amount of power generation as the target. The plant function analysis processing unit 101 analyzes functions and decides a function of achieving the amount of power generation set as the target. One example of the function for achieving this target is a function of dissipating heat at a high temperature place using a heat sink. There are usually a plurality of functions for achieving this target.

The plant function analysis processing unit 101 decides, for example, a device or a system that supports each of a plurality of existing functions, and assigns a manipulation of the decided device or system to an operator or machine.

In the embodiment of the present invention, a manipulation of a device or a system assigned to a worker among manipulations of the device or the system assigned to the worker or machine by the plant function analysis processing unit 101 is referred to as a task.

A request from an end user is reflected in function analysis performed by the plant function analysis processing unit 101.

The task analysis processing unit 102 analyzes the task. The task analysis processing unit 102 determines a task request on the basis of an analysis result of analyzing the task. Here, the task request is a request from a specific instruction system, manipulation device, communication, or the like to be used to perform the task. An example of the specific instruction system that has to be used to perform the task is an instruction from a section manager A. Further, an example of the specific manipulation device to be used to perform the task is a control board B. An example of the specific communication that has to be used to perform the task is that the operator A acquires work information from an operator B on site when the operator A performs work.

Specifically, the task analysis processing unit 102 performs breakdown of the task in order to analyze what types of subtasks are included in the task.

The task analysis processing unit 102 analyzes a relationship between the respective subtasks obtained by performing breakdown of the task. For example, the task analysis processing unit 102 performs breakdown of the task into subtask A and subtask B. In this case, the task analysis processing unit 102 analyzes that, for example, a relationship that subtask A is an input and subtask B is an output, that is, a relationship between subtask A and subtask B is a relationship between an input and an output. Further, the task analysis processing unit 102 may analyze the broken-down subtask A and subtask B using tabular analysis. Here, the tabular analysis is analysis using a table and is analysis of subtask A and subtask B using a plurality of evaluation items. For example, the task analysis processing unit 102 analyzes that decision-making is necessary for the subtask A and illumination is required to be bright as an environmental condition. In addition, the task analysis processing unit 102 analyzes that the illumination is required to be dark for the subtask B.

Further, the task analysis processing unit 102 may analyze the broken-down subtask A and subtask B using timeline analysis. Here, the timeline analysis is to analyze a task on a time axis and analyze a relationship between subtask A and subtask B on the time axis. For example, the task analysis processing unit 102 analyzes that the subtask A starts a process before subtask B.

Further, the task analysis processing unit 102 may analyze the broken-down subtask A and subtask B using workload analysis. Here, the workload analysis involves analyzing tasks required to be completed in a predetermined time and analyzing whether the prediction of an actual work time is made to what extent with respect to the predetermined time. For example, the task analysis processing unit 102 analyzes that the prediction of actual work time is 25 minutes using the workload analysis for three subtasks including subtask A, subtask B, and subtask C which are required to be completed in 30 minutes. In addition, when the workload analysis is used, the task analysis processing unit 102 may predict the actual work time using past advice (expert judgment) from experienced persons.

Further, the task analysis processing unit 102 may analyze the broken-down subtask A and subtask B using cognitive task analysis. Here, the cognitive task analysis involves investigating in advance that a feeling of stress is made from what kind of environmental conditions in performing each subtask to at least three experienced staff members using a questionnaire, or the like, and is to perform analysis from a psychological point of view in cognitive engineering.

A request from the end user is reflected in the task analysis that is performed by the task analysis processing unit 102.

The staff assignment processing unit 103 assigns staff necessary for an operation of the plant. For example, the staff assignment processing unit 103 determines and assigns the maximum number of staff members and the minimum number of staff members necessary for an operation from stop to start of the plant, including staff who performs maintenance.

The human reliability analysis processing unit 104 generates a specific task request by performing human reliability analysis. Human reliability analysis involves analyzing tasks using a human error rate.

The operation experience reflection processing unit 106 is a database that stores records on accidents that have occurred due to human error in the past. For example, the operation experience reflection processing unit 106 is a database that stores information on accidents that have occurred due to a human error in the past.

A specific example of an accident is that an occurrence itself of an accident caused by a past human error was overlooked and the same accident occurred again.

Further, another example of a specific accident is that a manipulation device performing a remote manipulation could not be manipulated since the manipulation device was not set to a remote manipulation.

Further, still another example of a specific accident is that a human error occurred due to lack of training.

The HFE database 105 is a database that stores information necessary for the HFE processing device 10 to perform HFE analysis.

Specifically, the HFE database 105 stores information including information I, control C, and staffing S. Herein, information I is information necessary for performance of each task. Control C is information indicating what type of manipulation device is required for performance of each task. Staffing S is information indicating how many workers with what type of skill are necessary for performance of each task.

The HFE database 105 may include respective storage areas corresponding to the plant function analysis processing unit 101, the task analysis processing unit 102, the staff assignment processing unit 103, the human reliability analysis processing unit 104, and the operation experience reflection processing unit 106, as illustrated in FIG. 2.

The IT database 107 stores a comment generated in the user feedback processing device 30, that is, stores a task to be improved and candidates for a countermeasure when the task to be improved is actually improved in association with each other, as will be described below.

The improvement support unit 108 presents a countermeasure to be close to a target value when improvement in a plant design process is desired and the target value of improvement is not reached.

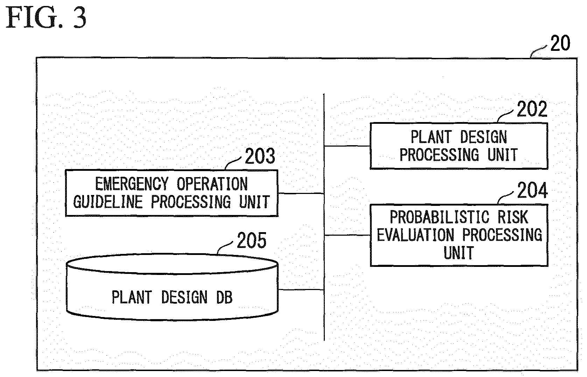

The condition setting processing device 20 transmits an analysis result of the HFE processing device 10, constraints of the plant, and a past operation experience at a similar plant to the user feedback processing device 30. As illustrated in FIG. 3, the condition setting processing device 20 includes a plant design processing unit 202, an emergency operation guideline processing unit 203, a probabilistic risk evaluation processing unit 204, and a plant design database 205.

A process in each processing unit may be a process using a program or a process that is executed by a designer.

The plant design processing unit 202 transmits conditions for generating a concept using the user feedback processing device 30, that is, transmits the analysis result of the HFE processing device 10, the constraints of the plant, and the past operation experience at a similar plant to the user feedback processing device 30.

The emergency operation guideline processing unit 203 provides guidelines when the plant is operated at the time of an emergency.

The probabilistic risk evaluation processing unit 204 converts the task request generated by the human reliability analysis processing unit 104 into statistical data using a probability theory and adds the statistical data to the plant design database 205.

The plant design database 205 stores the analysis result of the HFE processing device 10, the constraints of the plant, and the past operation experience at a similar plant, which the plant design processing unit 202 transmits to the user feedback processing device 30.

The user feedback processing device 30 generates one HF concept using four concepts (a man-machine system concept, a load-effects concept, a usability concept, and an accessibility concept) on the basis of the analysis result of the HFE processing device 10, the constraints of the plant, and the past operation experience at a similar plant. The user feedback processing device 30 generates three prototypes on the basis of the generated HF concept, and an HF concept database 312 to be described below. The user feedback processing device 30 feeds back information on the three generated prototypes to the HFE processing device 10.

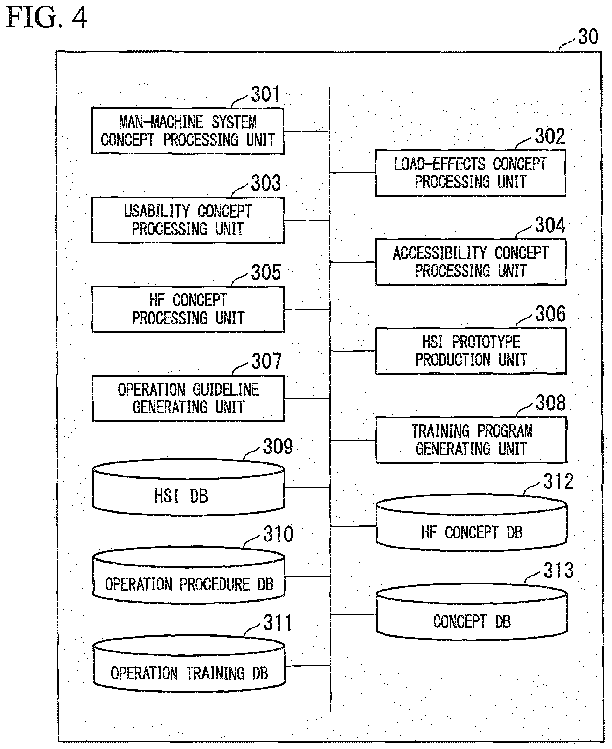

As illustrated in FIG. 4, the user feedback processing device 30 includes a man-machine system concept processing unit 301, a load-effects concept processing unit 302, a usability concept processing unit 303, an accessibility concept processing unit 304, an HF concept processing unit 305, a human system interface (HSI) prototype production unit 306, an operation guideline generating unit 307, a training program generating unit 308, an HSI database 309, an operation procedure database 310, an operation training database 311, an HF concept database 312, and a concept database 313.

A process in each processing unit may be a process using a program or a process that is executed by a designer.

The man-machine system concept processing unit 301 generates a man-machine system concept on the basis of the analysis result of the HFE processing device 10.

The load-effects concept processing unit 302 generates a load-effects concept on the basis of the analysis result of the HFE processing device 10.

The usability concept processing unit 303 generates a usability concept on the basis of the analysis result of the HFE processing device 10.

The accessibility concept processing unit 304 generates an accessibility concept on the basis of the analysis result of the HFE processing device 10.

The HF concept processing unit 305 generates an HF concept on the basis of the man-machine system concept generated by the man-machine system concept processing unit 301, the load-effects concept generated by the load-effects concept processing unit 302, the usability concept generated by the usability concept processing unit 303, the accessibility concept generated by the accessibility concept processing unit 304, the constraints of the plant, and the past operation experience at a similar plant.

The respective concepts are stored in association with information I, control C, or staffing S having a high degree of influence among information I, control C, staffing S, at each generating stage.

The man-machine system concept, the load-effects concept, the usability concept, and the accessibility concept are concepts described in ISO 26800 showing an ergonomic guidelines. The above concepts are merely examples of the concept of the embodiment of the present invention and do not limit the concept according to the embodiment of the present invention.

On the basis of the HF concept, the HSI prototype production unit 306 produces, for example, a mockup. The mockup produced by the HSI prototype production unit 306 may be a virtual mockup. The HSI database 309 stores information on the mockup produced by the HSI prototype production unit 306.

When the mockup produced by the HSI prototype production unit 306 is the virtual mockup, it is possible to simulate, for example, an arrangement of a control board, brightness of illumination, which is one of work conditions, or the like.

On the basis of the HF concept, the operation guideline generating unit 307 generates a prototype of operation guidelines of the plant. Information on the prototype of the operation guidelines of the plant generated by the operation guideline generating unit 307 is stored in the operation procedure database 310.

The training program generating unit 308 generates a prototype of a training program on the basis of the HF concept. Information on the prototype of the training program generated by the training program generating unit 308 is stored in the operation training database 311.

The concept database 313 stores four concepts (the man-machine system concept, the load-effects concept, the usability concept, and the accessibility concept).

The respective concepts are stored in association with information I, control C, or staffing S having a high degree of influence among information I, control C, and staffing S, at each generating stage. In addition, the respective concepts may be associated with a plurality of information including information I, control C, and staffing S.

The HF concept database 312 stores the HF concept.

In the design process support system 1 according to the first embodiment of the present invention, a prototype reflecting requests from not only the designer but also the end user of the plant is generated at an upstream stage of the design process.

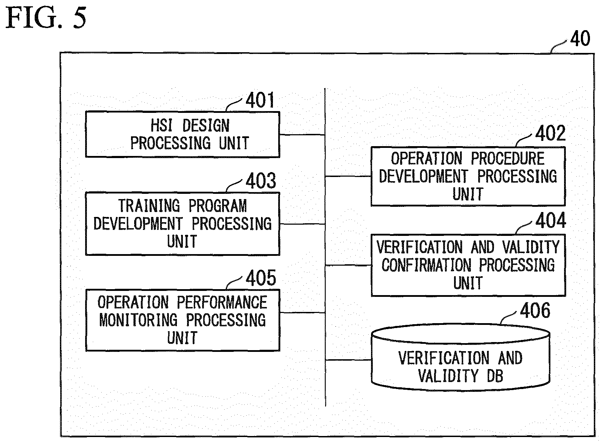

The verification processing device 40 is a device that evaluates validity of a final design. As illustrated in FIG. 5, the verification processing device 40 includes an HSI design processing unit 401, an operation procedure development processing unit 402, a training program development processing unit 403, a verification and validity confirmation processing unit 404, an operation performance monitoring processing unit 405, and a verification and validity database 406.

A process in each processing unit may be a process using a program or a process that is executed by a designer.

The HSI design processing unit 401 performs a final HSI design and produces a final plant.

The operation procedure development processing unit 402 generates the final operation guidelines.

The training program development processing unit 403 generates a final training program.

The verification and validity confirmation processing unit 404 compares respective actual measurement values of the final plant produced by the HSI design processing unit 401, the final operation guidelines generated by the operation procedure development processing unit 402, and the final training program generated by the training program development processing unit 403 with, for example, specification values, and determines that the actual measurement values are valid when a comparison result is in a predetermined range.

The operation performance monitoring processing unit 405 monitors and confirms an operation of the entire plant.

The verification and validity database 406 stores a final verification result of the plant.

Next, a process of the design process support system 1 according to the first embodiment of the present invention will be described.

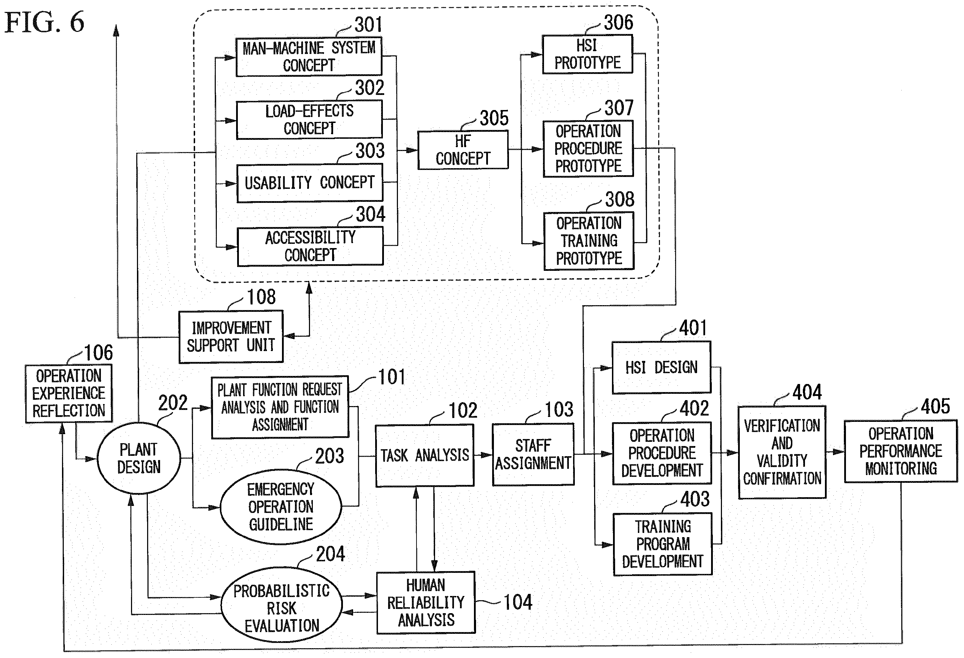

FIG. 6 illustrates a design process of the design process support system 1, and schematically illustrates a process flow of the design process support system 1.

Here, a process of the design process support system 1 will be described on the assumption that data has already been stored in each database.

First, each of the plant function analysis processing unit 101, the task analysis processing unit 102, the staff assignment processing unit 103, the human reliability analysis processing unit 104, and the operation experience reflection processing unit 106 performs HFE analysis on each current concept and each current setting.

As a result, it is assumed that it is found that the end user wanted to improve a workload (an example of the specification item), for example, since the workload is high for a current plant.

However, it is assumed that although a target workload has been changed to a small value, a concept of staff assignment is not changed.

In this state, each of the plant function analysis processing unit 101, the task analysis processing unit 102, the staff assignment processing unit 103, the human reliability analysis processing unit 104, and the operation experience reflection processing unit 106 performs HFE analysis on each concept and each current setting.

In this case, since a target value of the workload is changed, but conditions such as staff are not changed, a value of the workload is equal to that at a previous time.

Three combinations of information I, control C, staffing S, and effects due to a difference between the combinations (for example, the total number of staff members doubles and the workload is improved by 50% when the concept has been changed to a concept in which the number of staff members is increased by two) are stored in association with each other in each concept in advance.

The improvement support unit 108 compares the current concept with other possible concepts and determines, for example, the 5 best concepts having a greater effect for the workload that is the improvement item. The improvement support unit 108 may determine a concept that is a target from information I, control C, and staffing S of the items to be improved, and information I, control C, and staffing S of the concept.

The improvement support unit 108 informs the user of the 5 best concepts.

In this case, the improvement support unit 108 may inform the user of, for example, other merits and demerits such as a cost increasing with an increase in the number of staff members at the same time that the workload is improved.

The user comprehensively decides other merits and demerits to decide a concept to be adopted, together with the improvement of the workload.

The improvement support that is performed by the improvement support unit 108 has been described herein by taking the workload improvement as an example. However, it is obvious that items other than workload can be supported similarly.

The design process support system 1 according to the first embodiment of the present invention has been described above. The design process support system 1 according to the first embodiment of the present invention includes the concept database that stores concepts in which each specification item is associated with information indicating improvement or deterioration of the specification item for each of different design conditions, and the improvement support unit that determines the specification item desired to be improved by the user and informs of the concept of the design condition under which the determined specification item is improved.

Thus, the design process support system 1 can support improvement of the design process and eliminate rework at the end of the design process.

When the improvement support unit 108 informs of the concept of the design condition under which the determined specification item is improved, the improvement support unit 108 informs improvement or deterioration of specification items other than the determined specification item.

Thus, the design process support system 1 can provide, to the user, a proposal for improvement of a design process that is optimal when a cost, a time, a system scale, and the like are comprehensively determined.

Another embodiment of the present invention may eliminate a problematic concept without providing an alternative proposal for improvement.

There is an HF design process illustrated in FIG. 8 as a plant design process taking a general human organization factor of a power plant or the like, that is, human factors (HF) into consideration. The HF design process progresses in an integrated form with the plant design process. Plant design consists of long-term processes over respective phases from function analysis of a plant to design, construction, test, and operation. Meanwhile, in the HF design process, an INPUT and an OUTPUT of each HF design process are used for each other according to the plant designing phase. For example, an HF analysis result is used as an INPUT of the design. The INPUT and the OUTPUT of each HF design process are confirmed in design verification and validation confirmation (V & V). Thus, in the HF design process, requirement tracing (traceability) to a downstream HF process of an upstream HF process result, and configuration management (Configuration Control) are necessary. In this case, there is a problem in that INPUT and OUTPUT coupling between HF design processes for performing these is not performed organically and efficiently.

The design process support system 1 according to the first embodiment of the present invention makes it easy to manage HF using computer system support (that is, conversion into a database DB and systemization).

Further, a risk of redesign and rework was caused, because an HF design process (HF analysis) proceeds without setting the HF concept taking human characteristics of the end user into consideration from the viewpoint of each of four basic concepts in human-centered design (for example, a man-machine concept, a load-effects concept, usability, and accessibility that are four basic concepts shown in ISO 26800) at the time of design planning and a design request; a design proceeds based on design conditions, and an intention, belief, or an analysis from an insufficient concept (assumption) of a plant designer; and problems unexpected by the plant designer occurred at the time of confirmation of the validity by the end user. The design process support system 1 according to the first embodiment of the present invention sets the HF concept on the basis of the four basic concepts in the human-centered design at the time of extraction of design requirements and proceeds with the HF design process, thereby reducing the risk of redesign and rework.

### <Second Embodiment

A design process support system 1 according to a second embodiment of the present invention will be described.

The design process support system 1 according to the second embodiment of the present invention has the same configuration as the design process support system 1 according to the first embodiment of the present invention illustrated in FIG. 1.

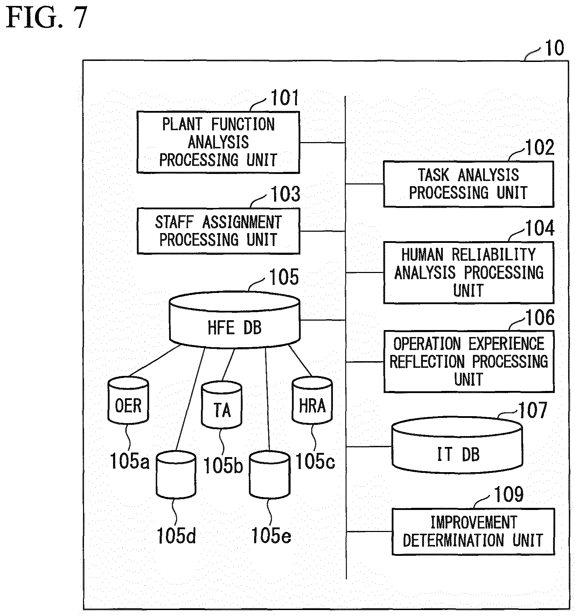

However, as illustrated in FIG. 7, the HFE processing device 10 includes an improvement determination unit 109 in place of the improvement support unit 108.

The improvement determination unit 109 determines the specification item to be improved (an improvement needed specification item) by the user and determines whether the determined specification item is an improvement needed specification item that is internally derived from the individual user or is a specification item to be improved (an improvement needed specification item), which is common to a plurality of users.

For example, when the human reliability analysis processing unit 104 performs human reliability analysis and an item to be improved for a certain user is found, it cannot be simply distinguished whether the item is an improvement item that is internally derived from the user or an improvement item that is common to a plurality of other users. Therefore, the improvement determination unit 109 compares the human reliability analysis between the user and other users with respect to the determined specification item. When one user deviates from a predetermined range as compared with the other users, the improvement determination unit 109 determines that the item is an improvement needed item that is internally derived from the one user. Further, when the user is in the same predetermined range as compared with the other users, the improvement determination unit 109 determines that the item is an improvement needed item that is internally derived from the plurality of users. That is, it can be seen that this is a problem related to information I or control C rather than staffing S.

When the improvement determination unit 109 determines that the item is an improvement needed item that is internally derived from the one user, the improvement determination unit 109 may urge the one user to perform training. Alternatively, the improvement determination unit 109 may output a profile of a factor influencing the HFE from analyzed information I, control C, and staffing S, such as changing an assignment of staff, and extract problematic concepts.

The design process support system 1 according to the second embodiment of the present invention has been described above. The design process support system 1 includes the concept database that stores concepts in which each specification item is associated with information indicating improvement or deterioration of the specification item for each of different design conditions, and the improvement determination unit that determines whether the determined specification item is an improvement needed specification item that is internally derived from the individual user or an improvement needed specification item that is common to a plurality of users.

Thus, the design process support system 1 can determine whether or not the item is a specification item to be improved by the user or a specification item to be improved, which is common to a plurality of users.

In the process according to the embodiment of the present invention, an order of processes may be changed in a range in which an appropriate process is performed.

Each of the storage units may be included anywhere in a range in which appropriate information transmission and reception are performed. Further, each of the storage units may store a plurality of pieces of existing data in a distributive manner in the range in which appropriate information transmission and reception are performed.

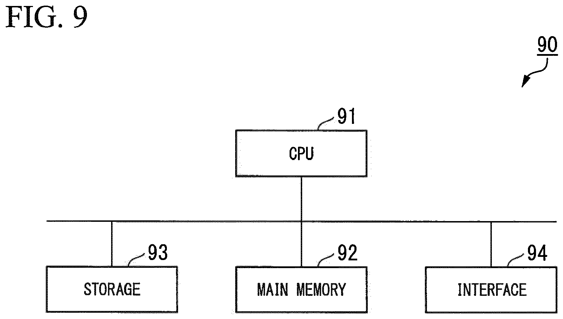

Although the embodiments of the present invention have been described, each of the devices in the three-dimensional attitude determination device 100 and the three-dimensional laminating system 1 described above may include, for example, a computer 90 as illustrated in FIG. 9 provided therein. The process described above is stored in a computer-readable recording medium (a storage 93) in the form of a program. A CPU 91 of the computer 90 reads this program to a main memory 92 and executes the program, thereby performing the above processing. Here, the computer-readable recording medium may be a magnetic disk, a magneto-optical disc, a CD-ROM, a DVD-ROM, a semiconductor memory, or the like. Further, this computer program may be distributed to the computer 90 via a communication line, and the computer 90 which has received this distribution via an interface 94 may execute the program.

Further, the above program may realize some of the functions described above. Further, the above program may be a file which can realize the functions described above in combination with a program already recorded in the computer 90, that is, a so-called difference file (a difference program).

Although a couple of embodiments of the present invention have been described, these embodiments are examples and do not limit the scope of the invention. Various additions, omissions, substitutions, and changes may be made to these embodiments without departing from the gist of the invention.

### Industrial Applicability

According to the design process support system according to the embodiment of the present invention, it is possible to support improvement of the design process and to eliminate rework at the end of the design process.

### Reference Signs List

1: process support system
10: HFE processing device
20: Condition setting processing device
30: User feedback processing device
40: Verification processing device
101: Plant function analysis processing unit
102: Task analysis processing unit
103: Staff member assignment processing unit
104: Human reliability analysis processing unit
105: HFE database
106: Operating experience reflection processing unit
107: IT database
108: Improvement support unit
109: Improvement determination unit
202: Plant design processing unit
203: Emergency operation guideline processing unit
204: Probabilistic risk evaluation processing unit
205: Plant design database
301: Man-machine system concept processing unit
302: Load-effects concept processing unit
303: Usability concept processing unit
304: Accessibility concept processing unit
305: HF concept processing unit
306: HSI prototype production unit
307: Operation guideline generating unit
308: Training program generating unit
309: HSI database
310: Operation procedure database
311: Operation training database
312: HF concept database
313: Concept database
401: HSI design processing unit
402: Operation procedure development processing unit
403: Training program development processing unit
404: Validation and validity confirmation processing unit
405: Operation performance monitoring processing unit
406: Validation and validity database

## Claims

1. A design process support system comprising:
a concept database that stores concepts for different design conditions, the concepts including specification items and information indicating an improvement or deterioration of the specification items so as to be associated with each other; and
an improvement support unit that is configured to inform of a concept of a design condition having a great influence on the specification item that a user desires to improve.

2. The design process support system according to Claim 1,
wherein the improvement support unit is configured to inform of improvement or deterioration of another specification item other than the specification item that the user desires to improve when the improvement support unit informs of the concept of the design condition.

3. A control method comprising:
storing concepts for different design conditions, the concepts including specification items and information indicating an improvement or deterioration of the specification items so as to be associated with each other; and
informing of a concept of a design condition having a great influence on the specification item that a user desires to improve.

4. A program causing a computer to execute:
storing concepts for different design conditions, the concepts including specification items and information indicating an improvement or deterioration of the specification items so as to be associated with each other; and
informing of a concept of a design condition having a great influence on the specification item that a user desires to improve.

5. A design process support system comprising:
a concept database that stores concepts for different design conditions, the concepts including specification items and information indicating an improvement or deterioration of the specification items so as to be associated with each other; and
an improvement determination unit that is configured to determine whether the specification item to be improved by a user is a specification item to be improved, which is internally derived from the user or a specification item to be improved, which is common to a plurality of users.
